# EUROPÄISCHE PATENTANMELDUNG

(11) **EP 4 840 289 A1**
(43) Veröffentlichungstag der Anmeldung: **18.11.2026**
(21) Anmeldenummer: 26166703.4
(22) Anmeldetag: 23.03.2026
(51) Int. Cl.: A01D 43/08, C21D 1/18, C21D 6/00, C21D 9/00, C22C 38/04, C22C 38/24

(54) **LANDWIRTSCHAFTLICHE MASCHINE UND VERFAHREN ZUM HERSTELLEN EINES ABSTREIFERS FÜR EINE LANDWIRTSCHAFTLICHE MASCHINE**

(30) Priorität: 15.05.2025 DE 102025118756
(71) Anmelder: CLAAS Saulgau GmbH, 88340 Bad Saulgau (DE)
(72) Erfinder: HAFEN, Felix, 88682 Salem (DE)
(74) Vertreter: CLAAS Gruppe

(57) **Zusammenfassung**

Landwirtschaftliche Maschine, mit mindestens einer Fördereinrichtung (10) zum Fördern von Erntegut, wobei die jeweilige Fördereinrichtung (10) übereinander oder nebeneinander positionierte Förderelemente (11) aufweist, mit mindestens einem feststehenden Abstreifer (14), der zwischen übereinander oder nebeneinander positionierte Förderelemente (11) ragt, wobei ein jeweiliger Abstreifer (14) eine Abstreifzunge (15) und plattenartige Deckelelementen (16, 17) aufweist, wobei die Abstreifzunge (15) des jeweiligen Abstreifers (14) zwischen einem ersten oder oberen Deckelelement (16) und einem zweiten oder unteren Deckelelement (17) des jeweiligen Abstreifers (14) angeordnet ist, wobei die Deckelelemente (16, 17) Abstreifkanten (18, 19) der Abstreifer (14) ausbilden, wobei die Deckelelemente (16, 17) des jeweiligen Abstreifers (14) aus einem lufthärtenden Vergütungsstahl gebildet sind, und wobei die Deckelelemente (16, 17) des jeweiligen Abstreifers (14) mit der Abstreifzunge (15) des jeweiligen Abstreifers (14) verschweißt sind.

## Beschreibung

Die Erfindung betrifft eine landwirtschaftliche Maschine nach dem Oberbegriff des Anspruchs 1. Des Weiteren betrifft die Erfindung ein Verfahren zum Herstellen eines Abstreifers für eine solche landwirtschaftliche Maschine.

DE 10 2022 128 070 A1 offenbart eine als Feldhäcksler ausgebildete landwirtschaftliche Maschine mit einem Maisgebiss. Das Maisgebiss verfügt über mehrere Mäh- und Einzugseinheiten, über mehrere Wendetrommeln sowie Einspeisetrommeln. Im Bereich der Wendetrommeln sind Abstreiforgane angeordnet, um im Bereich der Wendetrommeln Erntegut abzustreifen.

DE 10 2015 109 604 A1 offenbart ein weiteres Maisgebiss mit mehreren Fördereinrichtungen zum Fördern von Erntegut. Die Fördereinrichtungen verfügen über übereinander positionierte Förderelemente, wobei zwischen übereinander positionierte Förderelemente feststehende Abstreifer ragen. An den Abstreifern können Räumer montiert sein.

DE 10 2013 215 799 A1 offenbart eine weitere landwirtschaftliche Maschine mit einem Maisgebiss. Die landwirtschaftliche Maschine verfügt über mindestens eine Fördereinrichtung zum Fördern von Erntegut, wobei die Fördereinrichtung übereinander positionierte Förderelemente aufweist. Ferner weist die landwirtschaftliche Maschine feststehende Abstreifer auf, die zwischen die übereinander positionierten Förderelemente ragen. Die Abstreifer sind von Abstreiferzungen und plattenförmigen Deckelelementen gebildet. Zwischen zwei plattenartigen Deckelelementen ist jeweils eine Abstreiferzunge angeordnet.

Bei den Abstreiferkanten der Abstreifer handelt es sich um funktionsrelevante Bauteilkanten, die über eine definierte Kontur verfügen. Verschleißen diese Bauteilkanten, so wird die Funktionssicherheit beeinträchtigt, sodass die Abstreifer das Erntegut nicht mehr vollumfänglich abstreifen und weiterleiten können.

Es besteht Bedarf an einer landwirtschaftlichen Erntemaschine, bei der die Abstreifkanten der Abstreifer einem geringeren Verschleiß ausgesetzt sind.

Aufgabe der hier vorliegenden Erfindung ist es, eine entsprechende landwirtschaftliche Maschine sowie ein Verfahren zum Herstellen eines Abstreifers für eine solche landwirtschaftliche Maschine bereitzustellen.

Diese Aufgabe wird durch eine landwirtschaftliche Maschine nach Anspruch 1 und ein Verfahren zum Herstellen eines Abstreifers für eine solche landwirtschaftliche Maschine nach Anspruch 10 gelöst.

Erfindungsgemäß sind die Deckelelemente des jeweiligen Abstreifers der landwirtschaftlichen Maschine aus einem lufthärtenden Vergütungsstahl gebildet, wobei die Deckelelemente des jeweiligen Abstreifers mit der Abstreifzunge des jeweiligen Abstreifers der landwirtschaftlichen Maschine verschweißt sind.

Durch die Kombination der Werkstoffwahl für die Deckelelemente des jeweiligen Abstreifers mit der Schweißverbindung zwischen den Deckelelementen und der Abstreifzunge des jeweiligen Abstreifers können Abstreifkanten an den Abstreifern einer landwirtschaftlichen Erntemaschine bereitgestellt werden, die einem geringeren Verschleiß unterliegen. Somit können die Abstreifer der landwirtschaftlichen Maschine über einen längeren Zeitraum ihre Funktion uneingeschränkt bereitstellen. Über einen längeren Zeitraum kann Erntegut ordnungsgemäß über die Abstreifer der landwirtschaftlichen Maschine abgestreift werden.

Vorzugsweise sind die Deckelelemente des jeweiligen Abstreifers mit der Abstreifzunge des jeweiligen Abstreifers über die gesamte Länge der Abstreifkanten der Deckelelemente verschweißt. Dies ist besonders bevorzugt, um die Verschleißanfälligkeit der Abstreifkanten der Abstreifer zu reduzieren.

Vorzugsweise sind die Deckelelemente des jeweiligen Abstreifers mit der Abstreifzunge des jeweiligen Abstreifers über Laserschweißen oder über MAG-Schweißen oder über WIG-Schweißen verschweißt. Auch dies dient der weiteren Reduzierung der Verschleißanfälligkeit der Abstreifkanten der Abstreifer der landwirtschaftlichen Maschine.

Vorzugsweise sind die plattenartigen Deckelelemente Deckelbleche aus einem legierten, lufthärtenden Vergütungsstahl, der eine Ansprunghärte von mindestens 45 HRC oder von mindestens 50 HRC oder von mindestens 55 HRC oder von mindestens 60 HRC aufweist. Über einen solchen legierten, lufthärtenden Vergütungsstahl, aus welchem die Deckelelemente der Abstreifer gebildet sind, kann die Verschleißanfälligkeit der von den Deckelelementen bereitgestellten Abstreifkanten weiter reduziert werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. Dabei zeigt:
- Fig. 1: ein Detail aus einer erfindungsgemäßen landwirtschaftlichen Maschine im Bereich einer Fördereinrichtung der landwirtschaftlichen Maschine in perspektivischer Ansicht,
- Fig. 2: ein Detail der Fig. 1,
- Fig. 3: ein Detail der Fig. 2, und
- Fig. 4: eine Draufsicht auf ein Maisgebiss einer als Feldhäcksler ausgebildeten erfindungsgemäßen landwirtschaftlichen Maschine.

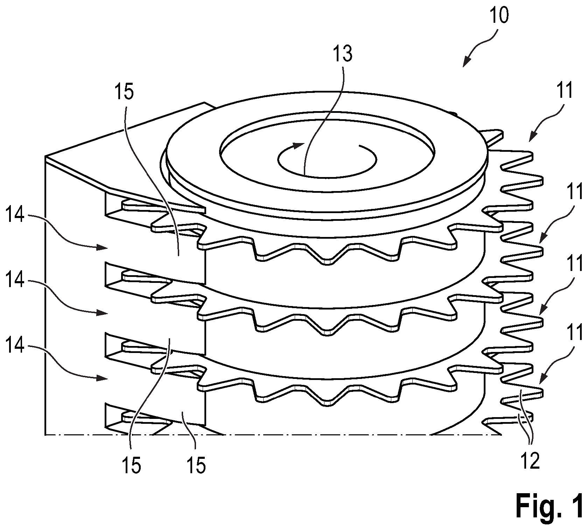

Fig. 1 zeigt einen Ausschnitt aus einer landwirtschaftlichen Maschine im Bereich einer Fördereinrichtung 10 der landwirtschaftlichen Maschine.

Die Fördereinrichtung 10 dient dem Fördern von Erntegut, wobei die Fördereinrichtung 10 mehrere übereinander positionierte Förderelemente 11 aufweist. Die Förderelemente 11 können auch nebeneinander positioniert sein. Bei den Förderelementen 11 handelt es sich um Ringe bzw. Kränze mit mehreren nach radial außen gerichteten Vorsprüngen 12, die dem Erfassen des zu transportierenden bzw. zu fördernden Ernteguts dienen.

Die Fördereinrichtung 10 bzw. die Förderelemente 11 derselben sind im Sinne des Pfeils 13 rotierend angetrieben.

Mit der Fördereinrichtung 10 wirken feststehende Abstreifer 14 zusammen, wobei zwischen jeweils zwei übereinander oder nebeneinander positionierten Förderelementen 11 vorzugsweise jeweils ein Abstreifer 14 ragt. Jeder der Abstreifer 14 weist eine Abstreifzunge 15 und plattenartige Deckelelemente 16, 17 auf.

Die Abstreifzunge 15 des jeweiligen Abstreifers 14 ist zwischen einem ersten oder oberen Deckelelement 16 und einem zweiten oder unteren Deckelelement 17 des jeweiligen Abstreifers 14 angeordnet, wobei die Deckelelemente 16, 17 Abstreifkanten 18, 19 ausbilden.

Die Deckelelemente 16, 17 des jeweiligen Abstreifers 14 sind mit der Abstreifzunge 15 des jeweiligen Abstreifers 14 verschweißt.

So ist das erste oder obere Deckelelement 16 des jeweiligen Abstreifers 14 im Bereich einer zweiten oder unteren Kante 20 desselben mit einer ersten oder oberen Kante 21 der Abstreifzunge 15 des jeweiligen Abstreifers 14 verschweißt, wobei eine erste oder obere Kante des ersten oder oberen Deckelelements 16 die erste oder obere Abstreifkante 18 des jeweiligen Abstreifers 14 ausbildet. Das zweite oder untere Deckelelement 17 ist im Bereich einer ersten oder oberen Kante 22 mit einer zweiten oder unteren Kante 23 der Abstreifzunge 15 des jeweiligen Abstreifers 14 verschweißt, wobei eine zweite oder untere Kante des zweiten oder unteren Deckelelements 17 die zweite oder untere Abstreifkante 19 des jeweiligen Abstreifers 14 bildet.

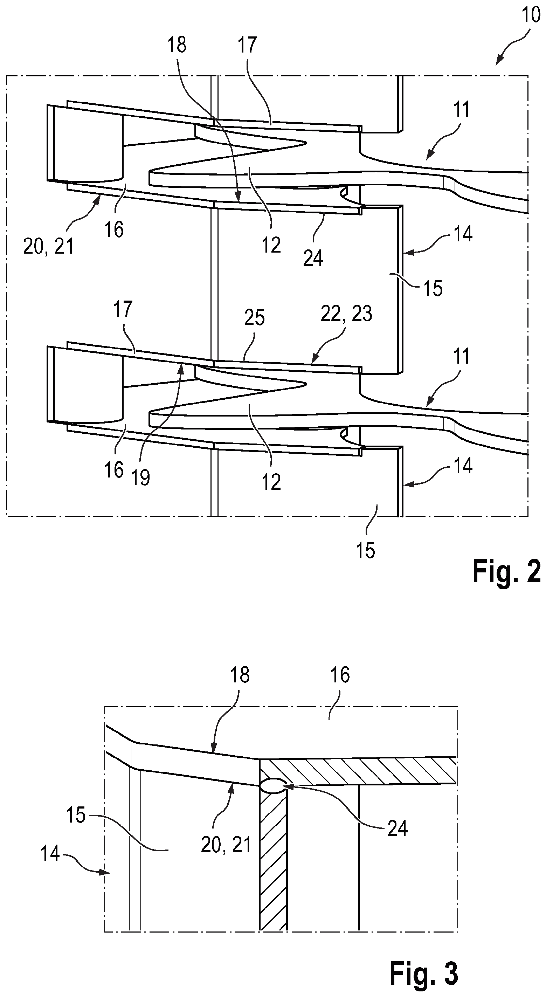

Die Deckelelemente 16, 17 des jeweiligen Abstreifers 14 sind mit der Abstreifzunge 15 des jeweiligen Abstreifers 14 über die gesamte Länge der Abstreifkanten 18, 19 der Deckelelemente 16, 17 verschweißt. Fig. 2 zeigt in gestrichelter Linienführung Schweißnähte 24, 25 zwischen der Abstreifzunge 15 und den Deckelelementen 16, 17 des jeweiligen Abstreifers 14. Diese Schweißnähte 24, 25 erstrecken sich vorzugsweise über die gesamte Länge der Abstreifkanten 18, 19.

Die Deckelelemente 16, 17 des jeweiligen Abstreifers 14 sind aus einem lufthärtenden Vergütungsstahl, vorzugsweise aus einem legierten, lufthärtenden Vergütungsstahl mit einer Ansprunghärte von mindestens 45 HRC oder von mindestens 50 HRC oder von mindestens 55 HRC oder von mindestens 60 HRC gebildet.

Die Abstreifzunge 15 des jeweiligen Abstreifers 14 ist vorzugsweise auch aus einem lufthärtenden Vergütungsstahl, vorzugsweise aus einem legierten, lufthärtenden Verfügungsstahl mit einer Ansprunghärte von mindestens 45 HRC oder von mindestens 50 HRC oder von mindestens 55 HRC oder von mindestens 60 HRC gebildet. Die Abstreifzunge könnte auch aus normalem Stahl hergestellt werden, da diese einem geringeren Verschleiß ausgesetzt ist.

Beim Verschweißen der Deckelemente 16, 17 des jeweiligen Abstreifers 14 mit der Abstreifzunge 15 desselben wird auch in den Bereich der von den Deckelelementen 16, 17 ausgebildeten Abstreifkanten 18, 19 thermische Energie eingebracht, über welche die Deckelelemente 16, 17 im Bereich ihrer Abstreifkanten 18, 19 auf eine Härtungstemperatur erhitzt werden können, um insbesondere unterstützt durch die sich an das Schweißen anschließende Lufthärtung die Abstreifkanten 18, 19 zu härten und so vor einem Verschleiß zu schützen. Die sogenannte Lufthärtung erfolgt dabei durch die Abkühlung an der Luft oder durch die Luft im Bereich der jeweiligen Schweißnaht 24, 25 sowie der die Abstreifkanten 18, 19 umfassenden Wärmeeinflusszone der jeweiligen Schweißnaht 24, 25.

Durch das Schweißen wird demnach im Bereich der jeweiligen Schweißnaht 24, 25 und damit auch im Bereich der Abstreifkanten 18, 19 des jeweiligen Abstreifers 14 eine hohe Wärmeenergie in die Deckelelemente 16, 17 des jeweiligen Abstreifers 14 eingebracht, wobei durch diesen Wärmeeintrag und das nachfolgende Abschrecken beim Abkühlen durch die Luft letztendlich die Abstreifkanten 18, 19 des jeweiligen Abstreifers 14 mit der hohen Härte und damit geringen Verschleißanfälligkeit bereitgestellt werden können. Dabei liegt die Ansprunghärte des luftgehärteten Vergütungsstahls bei mindestens 45 HRC oder mindestens 50 HRC oder mindestens 55 HRC oder mindestens 60 HRC.

Zumindest die plattenartigen Deckelelemente 16, 17 des jeweiligen Abstreifers 14 und vorzugsweise auch die Abstreifzunge 15 des jeweiligen Abstreifers 14 sind vorzugsweise aus einem 51CrV4 Stahl oder einem vergleichbaren Stahl gebildet.

Gegebenenfalls kann anschließend an das Schweißen ein Abkühlen mithilfe von Wasser oder Öl durchgeführt werden, um den Abschreckeffekt und die Härtung der Deckelelemente 16, 17 im Bereich ihrer Abstreifkanten 18, 19 zu verbessern. Die Kühlung mit Öl als Abschreckmittel muss selbstverständlich so durchgeführt werden, dass dessen Entzündung vermieden wird.

Wie bereits ausgeführt, sind die Deckelelemente 16, 17 des jeweiligen Abstreifers 14 mit der Abstreifzunge 15 des jeweiligen Abstreifers 14 verschweißt, vorzugsweise über Laserschweißen oder MAG-Schweißen oder WIG-Schweißen. Bevorzugt kommt Laserschweißen zum Einsatz, um die Deckelelemente 16, 17 des jeweiligen Abstreifers 14 mit der Abstreifzunge 15 desselben zu verschweißen.

Mit der Erfindung ist es möglich, auf einfache Art und Weise die Verschleißanfälligkeit von Abstreifern 14 einer landwirtschaftlichen Maschine zu reduzieren. Dabei wird die gewünschte Härte der Abstreifkanten 18, 19 der Abstreifer 14 durch die Materialwahl für die Deckelemente 16, 17 aus einem luftgehärteten Vergütungsstahl in Verbindung mit dem Verschweißen der Deckelelemente 16, 17 mit der Abstreifzunge 15 bereitgestellt, wobei die Abstreifzunge 15 auch aus einem luftgehärteten Vergütungsstahl bestehen kann.

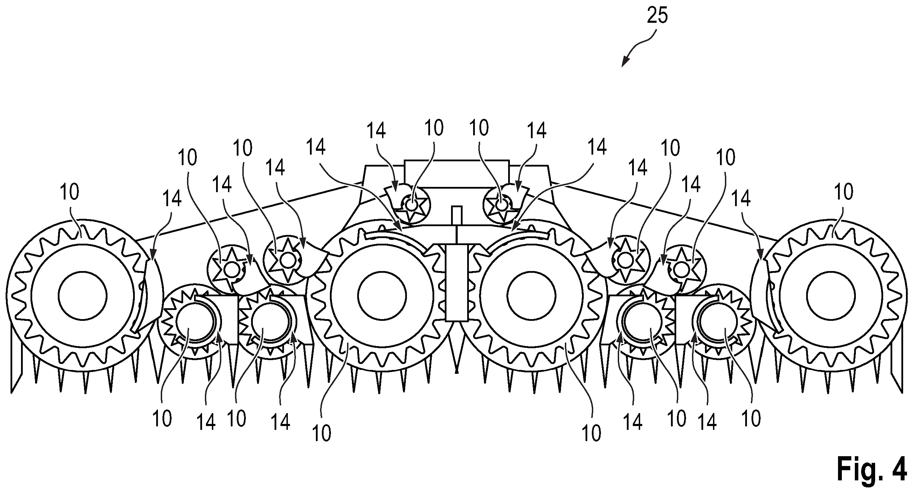

Bei der landwirtschaftlichen Maschine handelt es sich insbesondere um einen Feldhäcksler und bei der jeweiligen Fördereinrichtung 10 um eine Fördereinrichtung eines Maisgebisses des Feldhäckslers. Fig. 4 zeigt eine Draufsicht auf ein Maisgebiss 25 mit mehreren Fördereinrichtungen 10 und Abstreifern 14, die an unterschiedlichen Positionen des Maisgebisses 25 verbaut sein können, so zum Beispiel im Bereich von als Fördereinrichtungen 10, die auch Schneidorgane aufweisen, als auch im Bereich von als Fördereinrichtungen 10, die keine Schneidorgane aufweisen. Die Erfindung kann im Zusammenhang mit anderen Fördereinrichtung eines Feldhäckslers sowie im Zusammenhang mit anderen landwirtschaftlichen Maschinen zum Einsatz kommen.

### Bezugszeichenliste

- 10: Fördereinrichtung
- 11: Förderelement
- 12: Vorsprung
- 13: Drehrichtung
- 14: Abstreifer
- 15: Abstreifzunge
- 16: Deckelelement
- 17: Deckelelement
- 18: Abstreifkante
- 19: Abstreifkante
- 20: Kante
- 21: Kante
- 22: Kante
- 23: Kante
- 24: Schweißnaht
- 25: Schweißnaht
- 26: Maisgebiss

## Patentansprüche

1. Landwirtschaftliche Maschine,
mit mindestens einer Fördereinrichtung (10) zum Fördern von Erntegut, wobei die jeweilige Fördereinrichtung (10) übereinander oder nebeneinander positionierte Förderelemente (11) aufweist,
mit mindestens einem feststehenden Abstreifer (14), der zwischen übereinander oder nebeneinander positionierte Förderelemente (11) ragt,
wobei ein jeweiliger Abstreifer (14) eine Abstreifzunge (15) und plattenartige Deckelelementen (16, 17) aufweist, wobei die Abstreifzunge (15) des jeweiligen Abstreifers (14) zwischen einem ersten oder oberen Deckelelement (16) und einem zweiten oder unteren Deckelelement (17) des jeweiligen Abstreifers (14) angeordnet ist, und wobei die Deckelelemente (16, 17) Abstreifkanten (18, 19) der Abstreifer (14) ausbilden,
**dadurch gekennzeichnet, dass**
die Deckelelemente (16, 17) des jeweiligen Abstreifers (14) aus einem lufthärtenden Vergütungsstahl gebildet sind,
die Deckelelemente (16, 17) des jeweiligen Abstreifers (14) mit der Abstreifzunge (15) des jeweiligen Abstreifers (14) verschweißt sind.

2. Landwirtschaftliche Maschine nach Anspruch 1, **dadurch gekennzeichnet, dass** die Deckelelemente (16, 17) des jeweiligen Abstreifers (14) mit der Abstreifzunge (15) des jeweiligen Abstreifers (14) über Laserschweißen verschweißt sind.

3. Landwirtschaftliche Maschine nach Anspruch 1, **dadurch gekennzeichnet, dass** die Deckelelemente (16, 17) des jeweiligen Abstreifers (14) mit der Abstreifzunge (15) des jeweiligen Abstreifers (14) über MAG-Schweißen verschweißt sind.

4. Landwirtschaftliche Maschine nach Anspruch 1, **dadurch gekennzeichnet, dass** die Deckelelemente (16, 17) des jeweiligen Abstreifers (14) mit der Abstreifzunge (15) des jeweiligen Abstreifers (14) über WIG-Schweißen verschweißt sind.

5. Landwirtschaftliche Maschine nach einem der Ansprüche 1 bis 4, **dadurch gekennzeichnet, dass** die Deckelelemente (16, 17) des jeweiligen Abstreifers (14) mit der Abstreifzunge (15) des jeweiligen Abstreifers (14) über die gesamte Länge der Abstreifkanten (18, 19) der Deckelelemente (16, 17) verschweißt sind.

6. Landwirtschaftliche Maschine nach einem der Ansprüche 1 bis 5, **dadurch gekennzeichnet, dass**
das erste oder obere Deckelelement (16) des jeweiligen Abstreifers (14) im Bereich einer zweiten oder unteren Kante (20) derselben mit einer ersten oder oberen Kante (21) der Abstreifzunge (15) des jeweiligen Abstreifers (14) verschweißt ist, wobei eine erste oder obere Kante des ersten oder oberen Deckelelements (16) eine erste oder obere Abstreifkante (18) des jeweiligen Abstreifers (14) ausbildet,
das zweite oder untere Deckelelement (17) des jeweiligen Abstreifers (14) im Bereich einer ersten oder oberen Kante (22) derselben mit einer zweiten oder unteren Kante (23) der Abstreifzunge (15) des jeweiligen Abstreifers (14) verschweißt ist, wobei eine zweite oder untere Kante des zweiten oder unteren Deckelelements (17) eine zweite oder untere Abstreifkante (19) des jeweiligen Abstreifers (14) ausbildet.

7. Landwirtschaftliche Maschine nach einem der Ansprüche 1 bis 6, **dadurch gekennzeichnet, dass** die plattenartigen Deckelelemente (16, 17) Deckelbleche aus einem legierten, lufthärtenden Vergütungsstahl sind.

8. Landwirtschaftliche Maschine nach einem der Ansprüche 1 bis 7, **dadurch gekennzeichnet, dass** der lufthärtende Vergütungsstahl, aus welchem die Deckelelemente (16, 17) gebildet sind, eine Ansprunghärte von mindestens 45 HRC oder von mindestens 50 HRC oder von mindestens 55 HRC oder von mindestens 60 HRC aufweist.

9. Landwirtschaftliche Maschine nach einem der Ansprüche 1 bis 8, **dadurch gekennzeichnet, dass** die plattenartigen Deckelelemente (16, 17) aus 51CrV4 Stahl gebildet sind.

10. Verfahren zum Herstellen eines Abstreifers (14) einer landwirtschaftliche Maschine nach einem der Ansprüche 1 bis 9, mit Schritten:
Bereitstellen der Abstreifzunge (15) des Abstreifers (14),
Bereitstellen des ersten oder oberen Deckelelements (16) und des zweiten oder unteren Deckelelements (17) des Abstreifers (14), wobei die Deckelelemente (16, 17) des Abstreifers (14) aus einem lufthärtenden Vergütungsstahl gebildet sind,
Verschweißen der Deckelelemente (16, 17) des Abstreifers (14) mit der Abstreifzunge (15) des Abstreifers (14).

11. Verfahren nach Anspruch 10, **dadurch gekennzeichnet, dass** nach dem Verschweißen die Deckelelemente (16, 17) zumindest im Bereich der von denselben gebildeten Abstreifkanten (18, 19) über Abschrecken durch Wasser oder Öl gehärtet werden.
